# DEMANDE DE BREVET EUROPEEN

(11) **EP 0 815 773 A1**
(43) Date de publication de la demande: **07.01.1998**
(21) Numéro de dépôt: 97870080.5
(22) Date de dépôt: 30.05.1997
(51) Int. Cl.: A47B 47/04, F16B 12/46

(54) **Système d'assemblage pour carcasses massives ou mixtes.(Bois massif et panneaux)**

(30) Priorité: 26.06.1996 BE 9600580
(71) Demandeur: Lejeune, Eugène, 4031 Angleur (BE)
(72) Inventeur: Lejeune, Eugène, 4031 Angleur (BE)

(57) **Abrégé**

Système d'assemblage pour carcasses(bois massif et panneaux) Il comporte deux profils montants principaux(ref 6 où 7) Le profil intertcalaire(ref 1 où 1') s'encastre dans les montants (ref 6 où 7)

Ils ont deux fonctions:Renforcement des montants(ref 6 où 7) et blocage des traverses (ref 2) à distance désirée. Il détermine la distance entre traverses

Le profil traverse(ref 2)aura une section adaptée à l'effort qui lui sera demandé, Le bout de celui-ci s'emboitera dans le montant (ref 6 où 7). Le côté(réf 5) sera au choix: Un panneau,un chassis,où des traverses;il sera fixé au montant (ref 6 où 7)'à partir de la cavité de celui-ci. Les autre profils ne sont nécessaires que pour multiplier les formes des possibilités de montage.

Revendications:

La composante de toute forme des réalisations décrites ci-avant pour la réalisation de carcasses de meubles,ainsi que de constructions préfabriquées et de modèles réduits en toute matière appropriée.

## Description

On connaît partout, en dehors des assemblages classiques, un assemblage avec traverses en bois et montants métalliques profilés. Les bouts des traverses sont coupés à 45°. A ces mêmes bouts, une rainure de l'épaisseur des profilés métalliques est exécutée sur sa largeur. Cette technique ne donne aucune stabilité à la carcasse sans l'apport des panneaux de côté et de dos. Il ne permet pas de réaliser des carcasses à double face ou simple face (placard), ni des étagères sans panneau arrière et de côté. Le blocage des assemblages de carcasses ne peut pas se faire par collage, ni par vis; le blocage par vis est toutefois possible mais alors les têtes de vis restent apparentes. Il n'est pas possible avec ce système de réaliser des carcasses telles que celles des chaises, table, lit classique, simple face de meuble, double face de meuble, étagère sans panneaux de côté et arrière. La présente invention élimine tous ces inconvénients tout en présentant une carcasse complètement massive.

**Ses avantages sont:**
- Assemblage aisé par tout un chacun et sans outil.
- Pas de renforcement métallique ou autre.
- Réalisation de carcasse avec un minimum de profilés.
- Suppression de la presse de serrage lors du montage.
- Apport d'un créneau de vente complémentaire (pour bricoleurs).
- Vente au mètre courant des différents profils de montage (comme outillage, une boite à coupe et un ciseau de 12mm suffisent).

**L'invention est exposée ci-après plus en détail à l'aide de dessins représentant seulement un mode d'exécution.**

**La Fig I** représente la vue en plan du profil d'un montant simple (ref 6) exécuté en deux pièces assemblées par rainure et languette et d'une traverse (ref 2) assemblée dans le profil de montant (ref 6). A gauche, la traverse est représentée prête à l'assemblage. L'intercalaire (ref 1) sera explicité dans la Fig III.

**La Fig II** montre la vue en plan du profil du montant renforcé (ref 7) pour fixation du panneau de côté, qui peut être massif ou autre. Le panneau de côté (ref 5) est toujours fixé au profil montant (ref 7) par collage.

**La Fig III** représente le profil intercalaire (ref 1) qui déterminera les espaces entre les traverses (ref 2) tout en renforçant les profils montants (ref 6 et 7).

**La coupe A-B** représente la vue de face de la traverse (ref 2) des Fig I et II).

**La Fig IV** représente la vue en plan d'une carcasse de meuble. Les intercalaires (ref 1) entre traverses sont rainurés; des panneaux de dos peuvent venir s'y encastrer (étagère avec dos fermé).

**La Fig V A** représente une vue en plan d'une carcasse avec placement de coulisseaux (ref 4) pour tiroir, tout comme les intercalaires entre traverses et coulisseaux.

**La Fig V B** représente la même figure que la Fig V A mais avec son tiroir (ref 8) incorporé.

**La Fig VI** représente la technique de montage de carcasse avec corps avancé.

**La Fig VII** représente le montage d'un coin de carcasse à pan coupé.

Tous les éléments des différentes figures peuvent se combiner et ainsi, permettre la réalisation de carcasses pour tout genre de meubles. La technique de fabrication est simplifiée. La commercialisation pourra se faire au Mct de profil ou par carcasse prête à monter. Le système de montage élimine les presses de serrage et toute quincaillerie de montage: il supprime beaucoup de matériel coûteux (tenonneuse, mortaiseuse, presse de serrage).

**Donc, le créneau de vente est élargi (Brico, ébéniste, magasin de meubles) et la livraison est peu coûteuse .**

Le système comporte neuf profils référencés:
- Deux profils montants (ref 6 et 7) réalisés en deux pièces assemblées par rainure et languette.
- Un profil (ref 1 et 1') d'intercalaire entre traverses (ref 2) et coulisseaux (ref 4), entre sol et première tablette du bas (ref 3 et 3') profilée pour assemblage avec les profils (ref 6 et 7).
- Un profil de coulisseau (ref 4) pour suspension de tiroir (ref 8).
- Les côtés de la carcasse (ref 5) d'une seule pièce (massif, châssis avec panneau, ou panneau).
- Un profil (ref 9) pour pan coupé.

## Revendications

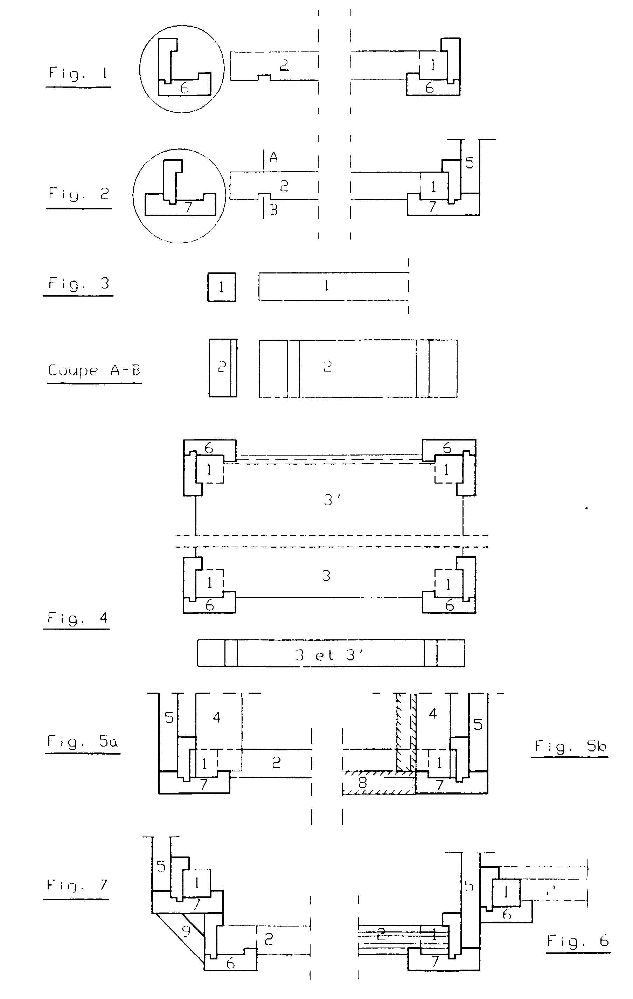

1. Le système se compose de neuf profils décrits ci-avant ( Texte : Page 2 ; Illustrations : Page 5, Fig 1 à Fig 7).

2. Caractérisé en ce que les côtés (N° 5 et N° 7, Fig 5a et Fig 5b) et (N° 5 et N° 6, Fig 7) ainsi que (N° 5 et N° 7 de la Fig 6 et Fig 7) seront réalisés d'une seule pièce et que l'on pourra réaliser des corps avancés (Fig 6), et des pans coupés (Fig 7) pour carcasses de meubles. Les traverses (N° 2, Fig 1 et Fig 2) s'encastrent dans les profils (N° 6 Fig 1 et N° 7 Fig 2). L'assemblage par panneaux (N° 3 et N° 3' Fig 4) se fera par encastrement de ceux-ci dans les profils (N° 6 ou N° 7). Cela peut être appliqué par exemple pour la réalisation d'étagères à côtés ouverts. Les profils intercalaires (N° 1 ou N° 1' Fig 3) s'encastrent dans les profils (N° 6 Fig 1 ou N° 7 Fig 2). Ils détermineront l'espace, suivant le cas, entre le sol et la première traverse (N° 2 Fig 2), ou entre traverses.

3. Caractérisé en ce qu'aucune quincaillerie de montage n'est nécessaire. Une carcasse construite à l'aide des profils précités (N° 1 à N° 9) sera montable et démontable à souhait, sans outil, si ce n'est qu'éventuellement à l'aide d'un simple marteau et d'une cale de protection pour éviter les coups. Caractérisé en ce que l'ensemble des différents profils ( N° 1 à N° 9) permettent de réaliser par combinaisons des uns et des autres, toutes les carcasses possibles de meubles, de construction préfabriquées et de modèles réduits (jouets) ainsi que toute ossature possible et imaginable. L'ensemble des profils sont réalisables par les méthodes traditionnelles pour le bois et par extrusion ou moulage pour les autres matières.
Le système ne demande pas de renforcement métallique ou autre, et les assemblages peuvent être éventuellement bloqués par vissage de l'intérieur sans aucune vis apparente. Pour l'élaboration d'ossature pour modèles réduits (jouets), les profils (N° 5 et N° 7 Fig 5a et 5b; N ° 6 Fig 1; N° 7 Fig 2 ) seront extrudés d'une seule pièce et en une seule opération. Le système d'assemblage sera caractérisé en ce que toute ossature (de meubles ou autres) pourra se réaliser en double face, et ne nécessitera plus, pour sa stabilité, de panneaux de dos. On peut ainsi se passer de panneaux de dos pour le montage de face de penderie, de meubles double face et pour le montage de cloisons quand un simple recouvrement de matière non portante comme par exemple du tissu peut suffire au besoin. La carcasse est conçue de telle sorte qu'elle accepte sans problème, aussi bien les portes coulissantes, que les portes pivotantes suspendues par charnières ou sur pivot. Ce système est aussi adaptable à l'élaboration d'ossature de constructions préfabriquées et également de modèles réduits (jouets ou maquettes).
La revendication recouvre toute forme de réalisations telles que décrites ci-dessus et d'autres empruntant, tout ou en partie, les éléments caractéristiques décrits ci-avant, et cela en quelque matière que ce soit.
